Europäisches Patentamt

European Patent Office

Office européen des brevets

(11) Veröffentlichungsnummer: **0 233 928**
**B1**

(12) **EUROPÄISCHE PATENTSCHRIFT**

(45) Veröffentlichungstag der Patentschrift:
**08.11.89**

(51) Int. Cl.⁴: **F 16 L 55/16, B 05 C 7/08**

(21) Anmeldenummer: **86905260.5**

(22) Anmeldetag: **07.08.86**

(86) Internationale Anmeldenummer:
**PCT/EP 86/00468**

(87) Internationale Veröffentlichungsnummer:
**WO 87/00906 (12.02.87 Gazette 87/4)**

(54) **VORRICHTUNG ZUR INNENBESCHICHTUNG VON ROHREN.**

(30) Priorität: **08.08.85 DE 3528446**

(73) Patentinhaber: **HANSCHEN, Hermann, Osterstrasse 21, D-2832 Twistringen (DE)**

(43) Veröffentlichungstag der Anmeldung:
**02.09.87 Patentblatt 87/36**

(72) Erfinder: **NOBIS, August, Am Brink 2-6, D-2832 Mörsen-Twistringen (DE)**

(45) Bekanntmachung des Hinweises auf die Patenterteilung:
**08.11.89 Patentblatt 89/45**

(74) Vertreter: **Eisenführ & Speiser, Martinistrasse 24, D-2800 Bremen 1 (DE)**

(84) Benannte Vertragsstaaten:
**AT BE CH DE FR GB IT LI LU NL SE**

(56) Entgegenhaltungen:
EP-A- 0 094 819
FR-A- 1 571 793
FR-A- 2 185 942

## Beschreibung

Die Erfindung betrifft eine Vorrichtung zur Innenbeschichtung von Rohren, mit einem ersten und einem zweiten in der Rohrinnenwand anliegenden und durch das Rohr bewegbaren Kalibermolch, wobei der zweite Kalibermolch dem ersten Kalibermolch bei einer Bewegung durch das Rohrinnere nachfolgt, mit einem Zwischenraum zwischen den beiden Kalibermolchen zur Aufnahme von Beschichtungsmaterial, wobei während der Bewegung die Kalibermolche mit Druck beaufschlagt sind und das Beschichtungsmaterial aus dem Zwischenraum auf die Rohrinnenwand aufgetragen wird.

Im Bereich der Chemie, insbesondere bei der Erdgas und Erdölförderung fällt in erheblichen Mengen Wasser mit aggressiven Bestandteilen (Schwefel, Salz) an. Dieses Wasser wird mit teilweise sehr hohen Drücken (bis 200 bar) durch verschweißte Stahlrohre transportiert. Sind diese von innen nicht isoliert, so werden sie in kurzer Zeit durch Lochfraß zerstört, was neben der Funktionsbeeinträchtigung auch zu einer erheblichen Gefährdung der Umwelt führt.

Zur Verhinderung des Lochfraßes ist vorgeschlagen worden, Kunststoffrohre in die Stahlrohre einzuziehen. Dies führt jedoch zu einer unerwünschten Verengung des Rohrquerschnittes.

Zur Vermeidung dieses Effektes ist die Innenbeschichtung der Rohre mit einem gegen die anfallenden aggressiven Medien resistenten Material bekannt. Diese Beschichtung erfolgt in Rohren mit großen Querschnitten durch fahrbare Wagen, die Beschichtungsmaterial versprühen. Bei Rohren mit kleinen Querschnitten ist dieser Weg jedoch nicht gangbar.

Zur Innenbeschichtung von Rohren mit kleinen Querschnitten ist es aus der FR-A 2 185 942 bekannt, ein Paket, bestehend aus zwei Kalibermolchen, zwischen denen sich das im allgemeinen flüssige Beschichtungsmaterial befindet, in dem Rohr hin und her zu ziehen. Nachteilig bei einem derartigen Vorgehen sind die Schwachpunkte, die im Bereich von Unebenheiten der Rohrinnenfläche, insbesondere an den Schweißnähten, dadurch entstehen, daß das Beschichtungsmaterial von dem zweiten Kalibermolch abgestreift wird und sich so Angriffspunkte für die aggressiven Medien bilden.

Ein anderes, aus der WO 8 501 895 bekanntes Verfahren zur Innenbeschichtung von Rohren ist das luftfreie Farbzerstäuben (sogenanntes Airless-Verfahren). Hierbei wird das Beschichtungsmaterial von einem außerhalb des Rohres befindlichen Tank aus mittels einer Hochdruckpumpe und einem Hochdruckschlauch zu einer Düse im Rohr gepumpt. Durch den hohen Druck in der Düse wird das Material zerstäubt und beschichtet die Rohrinnenfläche. Nachteilig an einem derartigen Verfahren ist, daß durch den beträchtlichen Druckverlust aufgrund der Reibung in dem Hochdruckschlauch nur begrenzte Rohrlängen beschichtet werden können.

Gerade in der Erdöl- und Erdgasförderung aber werden zum Transport der geförderten Stoffe Rohre (Pipelines) eingesetzt, die zum Teil unterirdisch über weite Strecken verlaufen und bei denen die regelmäßig in Jahres- oder Halbjahresintervallen notwendige Neubeschichtung der Rohrinnenflächen einen beträchtlichen Aufwand verursacht. In Abständen von ca. 300 m wird aufgegraben und das Rohr auseinandergeschweißt, um mit einer der bekannten Vorrichtungen die Innenbeschichtung vorzunehmen.

Aufgabe der Erfindung ist es daher, eine Vorrichtung vorzuschlagen, mit der auch sehr lange, dünne Rohre gleichmäßig und zuverlässig von innen beschichtet werden können, ohne daß an Unebenheiten der Rohrinnenfläche die Beschichtung zu dünn aufgetragen oder ganz unterbrochen wird.

Diese Aufgabe wird bei der Vorrichtung der eingangs genannten Art erfindungsgemäß dadurch gelöst, daß eine Sprüheinrichtung hinter dem zweiten Kalibermolch angekoppelt ist, die mittels einer durch den zweiten Kalibermolch hindurchgeführten Materialleitung mit dem Zwischenraum zwischen den Kalibermolchen verbunden ist und Beschichtungsmaterial aus dem Zwischenraum zerstäubt.

Bei Verwendung einer derartigen Vorrichtung wird das Beschichtungsmaterial in unmittelbarer Nähe der Sprüheinrichtung mitgeführt, so daß praktisch keine Druckverluste auf dem Weg zur Sprüheinrichtung auftreten können; gleichzeitig sorgt die zerstäubende Sprüheinrichtung für eine berührungsfreie, gleichmäßige Innenbeschichtung des Rohres auch an Schweißnähten und anderen Unebenheiten der Rohrinnenfläche.

Außerdem streichen die Kalibermolche, welche elastisch gegen die Rohrinnenwand anliegen, das im Zwischenraum befindliche Beschichtungsmaterial als dünnen Grundierungsfilm auf die Rohrinnenfläche, so daß eventuell für die Sprüheinrichtung schwer zugängliche Poren und Vertiefungen bereits mit dem Beschichtungsmaterial bestrichen sind, wenn die Sprüheinrichtung den entsprechenden Bereich der Rohrinnenfläche erreicht.

Bereiche, insbesondere an den Schweißnähten, von denen der zweite Kalibermolch die Beschichtung bis auf einen Grundierungsfilm abstreift, werden von der vorzugsweise radial wirkenden Sprüheinrichtung jeweils wiederum mit neuem Beschichtungsmaterial abgedeckt.

Mit erfindungsgemäßen Vorrichtungen können Rohre sprühbeschichtet werden, deren Länge ein Vielfaches der mit bekannten Vorrichtungen besprühbaren Längen beträgt. Die Zahl der kostspieligen erforderlichen Aufgrabungspunkte bei unterdisch verlaufenden Rohren kann so deutlich vermindert werden. Durch die gleichmäßige Innenbeschichtung ist gegebenenfalls auch eine Verlängerung der Zeitintervalle zwischen zwei Neubeschichtungen möglich.

Von besonderem Vorteil ist es, wenn die Sprüheinrichtung ein Schleuderrad oder eine Rotationsdüse aufweist, die dann von Druckluft aus einem Druckluftdepot in Umdrehung versetzt werden. Alternativ kann auch ein Elektromotor als Antrieb oder eine nicht rotierende Spritzdüse vorgesehen werden.

Zur Zerstäubung des Beschichtungsmaterials wird das Material entweder mit Druckluft aus dem Druckluftdepot oder mit dem Förderdruck einer elektrischen Förderpumpe beaufschlagt, die mit einem in den Zwischenraum hineinragenden Förderelement das Beschichtungsmaterial durch die Materialleitung zur Sprühdüse drückt.

Bevorzugt sind Zugseile mit dem zweiten Kalibermolch verbunden und werden durch den Zwischenraum und den ersten Kalibermolch hindurchgeführt und mit einer Seilwinde außerhalb des Rohres gekoppelt. Durch Zug an den Zugseilen wird das Beschichtungsmaterial im Zwischenraum komprimiert und durch den dabei entstehenden Druck durch die Materialleitung der Sprüheinrichtung zugeführt. Eine Förderpumpe für den Transport des Beschichtungsmaterials zur Düse der Sprüheinrichtung ist bei dieser Ausführungsform der Erfindung nicht notwendig.

Von Vorteil ist es, wenn die Druckluftleitung im Zwischenraum und zwischen Druckluftdepot und erstem Kalibermolch eigenelastisch und spiralförmig gewunden ausgebildet ist. Sie kann sich so der abnehmenden Menge bzw. dem abnehmenden Abstand der beiden Kalibermolche anpassen.

Um Drehbewegungen der Kalibermolche auszugleichen, können die Anschlüsse der Druckluftleitungen über Gelenkkupplungen vorgesehen werden.

Weitere bevorzugte Merkmale der Erfindung sind in den Unteransprüchen gekennzeichnet.

Im folgenden werden anhand der beigefügten Zeichnung drei Ausführungsbeispiele der Erfindung im einzelnen beschrieben. Es zeigt:

Fig. 1 einen Längsschnitt eines Rohres mit einer Ausführungsform der erfindungsgemäßen Vorrichtung;

Fig. 2 einen Längsschnitt eines Rohres mit einer zweiten Ausführungsform der erfindungsgemäßen Vorrichtung; und

Fig. 3 einen Längsschnitt eines Rohres mit einer dritten Ausführungsform der Vorrichtung.

Ein Rohr 10 ist auf seiner Rohrinnenfläche 11 mit einer Innenbeschichtung aus Beschichtungsmaterial 16 zu versehen.

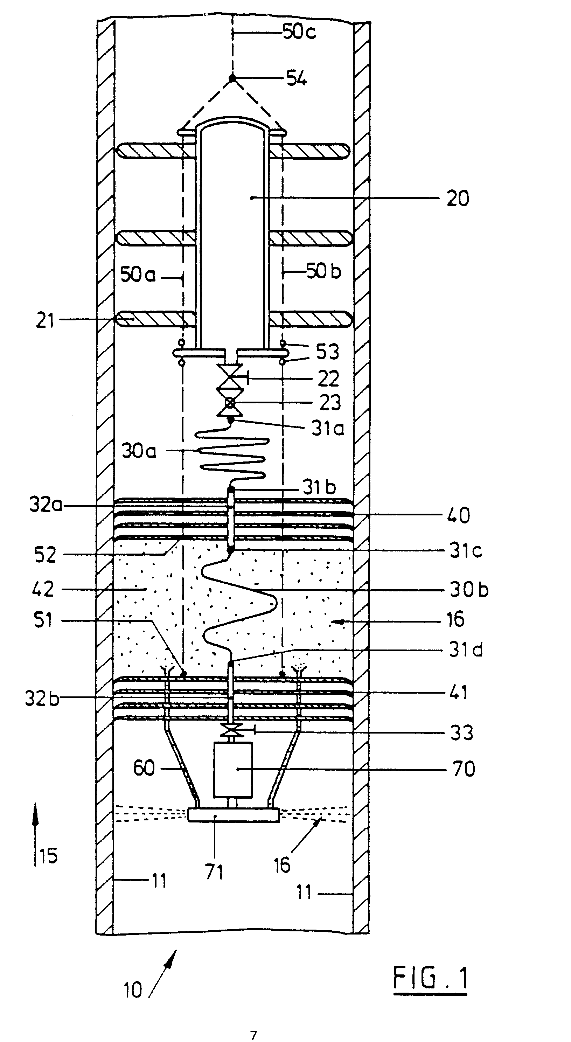

Die Vorrichtung zur Innenbeschichtung weist gemäß Fig. 1 ein Druckluftdepot 20 mit einem Druck von beispielsweise 200 bar auf, das auf Gleitkufen 21 gelagert ist. Es ist mit einem Hochdruck-Absperrventil 22 versehen, dem ein Druckminderer 23 nachgeschaltet ist. Der Ausgang des Druckminderers 23 befindet sich in der Achse der axialsymmetrischen Vorrichtung und damit zugleich in der Rohrachse.

An den Druckminderer 23 ist ein elastischer, spiralförmig gewundener Abschnitt 30a einer Druckluftleitung 30 angeschlossen. Die spiralförmigen Windungen verlaufen konzentrisch um die Vorrichtungs- bzw Rohrachse. Der Abschnitt 30a kann sich auch frei drehen, da er über eine Gelenkkupplung 31a an den Druckminderer 23 angeschlossen ist.

Das andere, dem Druckluftdepot 20 abgewandte Ende des Abschnitts 30a der Druckluftleitung 30 ist über eine Gelenkkupplung 31b an einen festen Leitungsabschnitt 32a in einem ersten Kalibermolch 40 angeschlossen. Der Kalibermolch 40 besteht aus mehreren beabstandeten Scheiben, die den Rohrquerschnitt vollständig ausfüllen und einen elastischen Rand besitzen, der gegen die Rohrinnenfläche anliegt.

Der feste Leitungsabschnitt 32a der Druckluftleitung 30 verläuft in der Achse des ersten Kalibermolches 40. Auf der anderen Seite des Kalibermolches 30 setzt an dem Leitungsabschnitt 32a über eine Gelenkkupplung 31C ein weiterer elastischer und spiralförmig konzentrisch um die Vorrichtungsachse gewundener Abschnitt 30b der Druckluftleitung 30 an. Er führt zu einem festen Leitungsabschnitt 32b in einem zweiten Kalibermolch 41, an den er über eine Gelenkkupplung 31d angeschlossen ist. Der zweite Kalibermolch 41 ist wie der erste Kalibermolch 40 aufgebaut und nimmt ebenfalls den gesamten Rohrinnenquerschnitt ein. Zwischen den beiden Kalibermolchen 40, 41 befindet sich ein Zwischenraum 42 zur Aufnahme des Beschichtungsmaterials 16.

An dem zweiten Kalibermolch 41 sind zwei Zugseile 50a, 50b mittels Zugösen 51 befestigt. Diese Zugseile 50a, 50b erstrecken sich achsparallel, symmetrisch, aber außermittig von dem zweiten Kalibermolch 41 durch den Zwischenraum 42 zum ersten Kalibermolch 40, durch den sie mittels Stopfbuchsen 52 geführt, aber an dem sie nicht befestigt sind. Die Zugseile 50a, 50b laufen dann weiter bis zu Zugösen 53 am Druckluftdepot 20. Von dort erstrecken sich abzweigend von weiteren Zugösen 53 die Zugseile 50a, 50b zu einer gemeinsamen Zugöse 54 in der Achse der Vorrichtung, von der ein axial vrlaufendes Zugseil 50c zu einer nicht dargestellten Seilwinde am Ende des Rohres 10 führt.

Der feste Leitungsabschnitt 32b der Druckluftleitung 30 durch den zweiten Kalibermolch 41 ist auf der dem Zwischenraum 42 abgewandten Seite des Kalibermolchs 41 mit einem Absperrventil 33 versehen. Von dort führt die Druckluftleitung 30 zu einer Sprüheinrichtung 70, 71, die fest mit dem zweiten Kalibermolch 41 verbunden ist und eine Druckluftturbine 70 mit einer Rotationsdüse 71 aufweist.

Durch den Kalibermolch 41 sind außerdem Materialleitungen 60a, 60b geführt, deren eines Ende offen ist und im Zwischenraum 42 mündet, und deren anderes Ende zur Rotationsdüse 71 führt.

Die Innenbeschichtung des Rohres 10 geschieht in folgender Weise:

Nach dem Reinigen der Rohrinnenfläche 11 wird die gesamte Vorrichtung entgegen der Beschichtungsrichtung (Pfeil 15) mittels einer Seilwinde durch das Rohr 10 eingezogen. Alternativ kann auch das Zugseil 50 durch das Rohr 10 geschossen oder gezogen werden. Anschließend werden dann am Ende des Rohrs in einem separaten, zugänglichen Rohrteil (nicht dargestellt) die einzelnen Teile miteinander verbunden und der Zwischenraum 42 zwischen den Kalibermolchen 40 und 41 mit dem Beschichtungsmaterial 16 gefüllt.

Eine vorzugsweise stufenlos arbeitende Seilwinde zieht mit einer vorbestimmten Geschwindigkeit über die Zugseile 50c, 50a, 50b das Druckluftdepot 20 und den zweiten Kalibermolch 41 durch das Rohr 10. Der erste Kalibermolch 40 wird nicht von einem der Zugseile gezogen, er wird aber von dem Beschichtungsmaterial 16 im Zwischenraum 42, das sich vor dem zweiten Kalibermolch 41 staut, in Zugrichtung geschoben. Der dabei entstehende Druck zwingt das Beschichtungsmaterial 16 durch die Materialleitungen 60 in die Rotationsdüse 71 der Druckluftturbine 70. Bei entsprechend betätigten Absperrventilen 22, 33 treibt die Druckluft die Druckluftturbine 70 mit einer Umdrehungsgeschwindigkeit von beispielsweise 20.000 U/min an. Durch die hohe Umdrehungzahl wird das Beschichtungsmaterial 16 zerstäubt. Ein Strom zerstäubten Beschichtungsmaterials 16 wird dann von der Rotationsdüse 71 auf die Rohrinnenfläche 11 aufgesprüht.

Bei der Bewegung der Vorrichtung durch das Rohr 10 hindurch streicht der zweite Kalibermolch 41 zuvor noch Beschichtungsmaterial aus dem Zwischenraum 42 direkt an die Rohrinnenfläche, und auf diese Grundierung folgt dann anschließend die Sprühbeschichtung durch die Sprüheinrichtung.

Bei fortschreitender Beschichtung nimmt der Vorrat an Beschichtungsmaterial 16 in dem Zwischenraum 42 zwischen den beiden Kalibermolchen 40, 41 ab. Der Beschichtungsraum 42 wird dadurch kleiner, die beiden Kalibermolche 40, 41 rücken aufeinander zu. Der Abschnitt 30b der Druckluftleitung 30 im Zwischenraum 42 braucht dann nur eine geringere axiale Länge zu durchqueren; die spiralförmigen Windungen werden dadurch zusammengeschoben.

Umgekehrt nimmt der Abstand zwischen den beiden Gelenkkupplungen 31a, 31b, also der Abstand zwischen dem Druckminderer 23 des Druckluftdepots 20 und dem ersten Kalibermolch 40 zu, da der Abstand zwischen dem Druckluftdepot 20 und dem zweiten Kalibermolch 41 konstant bleibt. Der Abschnitt 30a der Druckluftleitung 30 muß daher eine längere axiale Strecke überbrücken, diese spiralförmigen Windungen werden daher auseinandergezogen.

Die Gelenkkupplungen 31 in der Druckluftleitung 30 sind vorgesehen, um Belastungen zu vermeiden, die durch Drehbewegungen der Kalibermolche 40, 41 entstehen könnten.

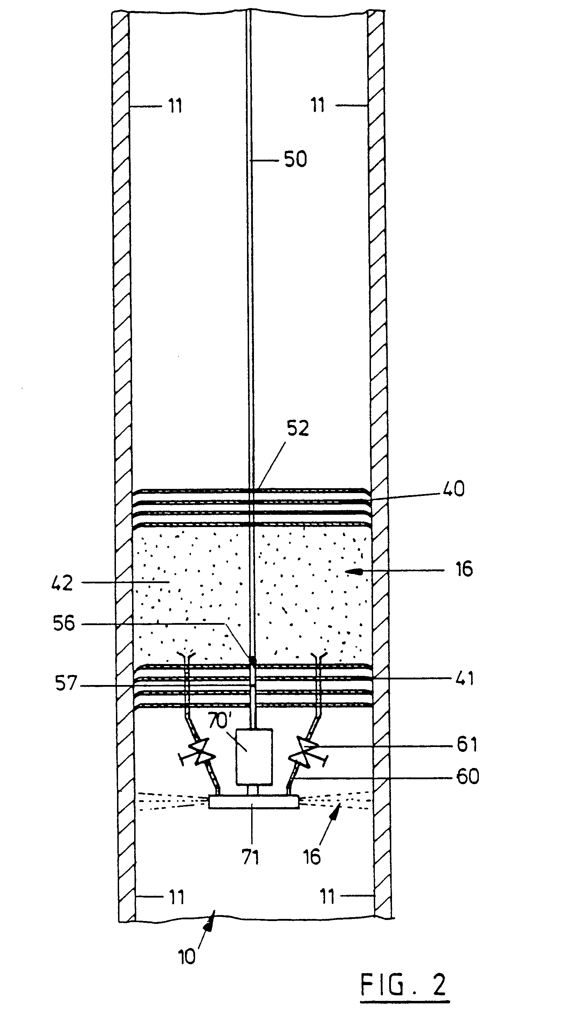

Die in Figur 2 dargestellte zweite Ausführungsform ist der ersten weitgehend ähnlich. Anstelle der Druckluftversorgung ist ein Elektromotor 70' in der Sprüheinrichtung 70', 71 eingesetzt. Dieser wird über eine elektrische Leitung 57 mit Strom versorgt, die als Seele in dem Zugseil 50 geführt ist. Das Zugseil 50 verläuft durch Stopfbuchsen 52 im ersten Kalibermolch 40, durch den Zwischenraum 42 hindurch, und ist am Befestigungspunkt 56 mit dem zweiten Kalibermolch 41 verbunden.

In den Materialleitungen 60 sind zur besseren Einstellbarkeit der Durchflußmenge auf die Beschichtungsgeschwindigkeit (Fortbewegungsgeschwindigkeit der Vorrichtung im Rohr) und damit zur Festlegung der Beschichtungsdicke auf der Rohrinnenfläche 11 Dosierventile 61 vorgesehen. Eine üblicherweise angestrebte Beschichtungsdicke beträgt etwa 400 µm.

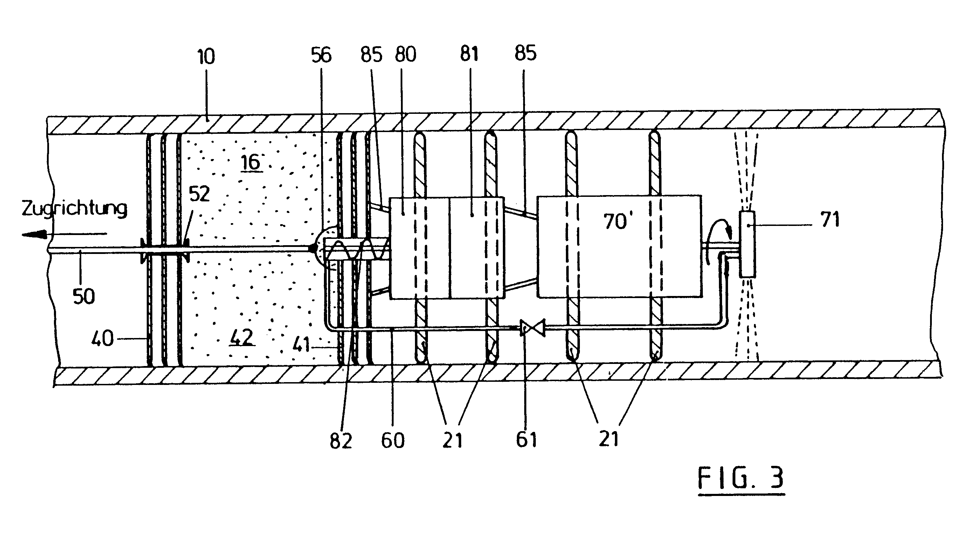

Die in Figur 3 dargestellte Ausführungsform enthält ebenfalls einen ersten Kalibermolch 40 und einen zweiten Kalibermolch 41, zwischen denen der Zwischenraum 42 vorhanden ist, welcher mit dem Beschichtungsmaterial 16 gefüllt ist. Am zweiten Kalibermolch 41 befindet sich eine zentrale Öse 56, an der das Zugseil 50 befestigt ist, welches durch den Zwischenraum 42 und durch eine zentrale, abdichtende Stopfbuchse 52 des ersten Kalibermolchs 40 hindurchgeführt ist und zum einen Ende des Rohrs 10 läuft. Das Zugseil 50 ist relativ zur Stopfbuchse 52 beweglich, so daß der erste Kalibermolch 40 sich dem zweiten Kalibermolch 41 annähert, wenn das Beschichtungsmaterial 16 aus dem Zwischenraum 42 abnimmt.

In Zugrichtung ist hinter dem zweiten Kalibermolch 41 eine Förderpumpe 80 mittels Koppelgliedern 85 angekoppelt, die von einem Elektromotor 81 angetrieben wird und auf Gleitelemente 21 zentral im Rohr 10 lagert. Durch den zweiten Kalibermolch 41 hindurch erstreckt sich das vom Elektromotor 81 angetriebene Förderelement 82 der Förderpumpe 80 und fördert das Beschichtungsmaterial 16 in die Öffnung der Materialleitung 60 hinein, die durch den zweiten Kalibermolch 41 hindurch, über ein Dosierventil 61 das Beschichtungsmaterial zu der Düse 71 der Sprüheinrichtung führt. Die Sprüheinrichtung 70', 71 ist mittels Koppelgliedern 85 hinter die Förderpumpe 80, 81 gekoppelt und lagert ebenfalls mittels Gleitelementen 21 zentral in dem Rohr 10. Die von einem Elektromotor 70' in Drehbewegung versetzte Düse 71 sprüht dann das Beschichtungsmaterial gleichmäßig gegen die Rohrinnenfläche.

**Patentansprüche**

1. Vorrichtung zur Innenbeschichtung von Rohren, mit einem ersten und einem zweiten in der Rohrinnenwand (11) anliegenden und durch das Rohr (10) bewegbaren Kalibermolch (40, 41), wobei der zweite Kalibermolch (41) dem ersten Kalibermolch (40) bei einer Bewegung durch das Rohrinnere nachfolgt, mit einem Zwischenraum (42) zwischen den beiden Kalibermolchen (40, 41) zur Aufnahme von Beschichtungsmaterial (16), wobei während der Bewegung die Kalibermolche (40, 41) mit Druck beaufschlagt sind und das Beschichtungsmaterial (16) aus dem Zwischenraum (42) auf die Rohrinnenwand (11) aufgetragen wird, dadurch gekennzeichnet, daß eine Sprüheinrichtung (70, 71) hinter dem zweiten Kalibermolch (41) angekoppelt ist, die mittels einer durch den zweiten Kalibermolch (41) hindurchgeführten Materialleitung (60) mit dem Zwischenraum (42) zwischen den Kalibermolchen (40, 41) verbunden ist und Beschichtungsmaterial (16) aus dem Zwischenraum (42) zerstäubt.

2. Vorrichtung nach Anspruch 1, dadurch gekennzeichnet, daß ein Zugseil (50) an dem zweiten Kalibermolch (41) befestigt ist und durch den Zwischenraum (42) und mittels Stopfbuchsen (52) abgedichtet durch den ersten Kalibermolch (40) hindurchgeführt ist und zur Bewegung der Kalibermolche (40, 41) an einem Ende des Rohres (10) eine Seilwinde ankoppelbar ist.

3. Vorrichtung nach einem der vorstehenden Ansprüche, dadurch gekennzeichnet, daß die Sprüheinrichtung (70, 71) zum Zerstäuben des Beschichtungsmaterials (16) mittels einer Druckluftleitung (30) mit einem Druckluftdepot (20) verbunden ist.

4. Vorrichtung nach Anspruch 3, dadurch gekennzeichnet, daß die Sprüheinrichtung (70, 71) eine Rotationsdüse aufweist, die mittels Druckluft aus dem Druckluftdepot (20) oder mittels eines Elektromotors (70') in Drehbewegung versetzbar ist.

5. Vorrichtung nach Anspruch 3 oder 4, dadurch gekennzeichnet, daß das Druckluftdepot (20) vor dem ersten Kalibermolch (40) oder zwischen den zweiten Kalibermolch (41) und die Sprüheinrichtung (70, 71) ankoppelbar ist und auf Gleitkufen (21) im Rohr (10) verschiebbar ist.

6. Vorrichtung nach Anspruch 5, dadurch gekennzeichnet, daß das Druckluftdepot (20) vor dem ersten Kalibermolch (40) angeordnet ist, daß die das Druckluftdepot (20) und die Sprüheinrichtung (70, 71) verbindende Druckluftleitung (30) durch den ersten Kalibermolch (40) und den Zwischenraum (42) hindurchgeführt ist und im Zwischenraum (42) spiralförmig verläuft.

7. Vorrichtung nach Anspruch 1 oder 2, dadurch gekennzeichnet, daß eine elektrische Förderpumpe (80, 82) vorgesehen ist, die das Beschichtungsmaterial (16) von dem Zwischenraum (42) durch die Materialleitung (60) hindurch zur Düse der Sprüheinrichtung (70', 71) fördert.

8. Vorrichtung nach Anspruch 7, dadurch gekennzeichnet, daß die Förderpumpe (80, 82) vor den ersten Kalibermolch (40) oder zwischen dem zweiten Kalibermolch (41) und der Sprüheinrichtung (70', 71) ankoppelbar ist und ein Förderelement (82) enthält, welches durch einen Kalibermolch (40, 41) hindurch in den Zwischenraum (42) ragt und das Beschichtungsmaterial (16) in die Materialleitung (60) zur Düse der Sprüheinrichtung (70', 71) drückt.

9. Vorrichtung nach einem der vorstehenden Ansprüche, dadurch gekennzeichnet, daß in der Materialleitung (60) ein Dosierventil (61) angeordnet ist.

## Claims

1. A mechanism for coating the inside of pipes, having one first and one second bore-scraper (40, 41) which rest against the inner wall (11) of the pipe and are movable through the pipe (10), where the second borescraper (41) in a movement through the inside of the pipe follows behind the first bore-scraper (40) with a gap (42) between the two bore-scrapers (40, 41) for receiving coating material (16), and during the movement the bore-scrapers (40, 41) are subjected to pressure and the coating material (16) from the gap (42) is applied to the inner wall (11) of the pipe, characterized in that behind the second bore-scraper (41) a spray device (70, 71) is coupled, which by means of a material feed (60) led through the second bore-scraper (41) is connected to the gap (42) between the bore-scrapers (40, 41) and atomizes coating material (16) from the gap (42).

2. A mechanism as in Claim 1, characterized in that a drag-rope (50) is fastened to the second bore scraper (41) and led through the gap (42) and through the first bore-scraper (40), sealed by means of glands (52), and for the movement of the bore-scrapers (40, 41) may be coupled to a rope winch at the end of the pipe (10).

3. A mechanism as in one of the preceding Claims, characterized in that the spray device (70, 71) for the atomization of the coating material (16) is connected by means of a compressed air feed (30) to a store (20) of compressed air.

4. A mechanism as in Claim 3, characterized in that the spray device (70, 71) exhibits a rotary nozzle which may be set in rotary motion by means of compressed air from the store (20) of compressed air or by means of an electronic motor (70').

5. A mechanism as in Claim 3 or 4, characterized in that the store (20) of compressed air may be coupled before the first bore-scraper (40) or between the second bore-scraper (41) and the spray device (70, 71) and can shift in the pipe (10) on skids (21).

6. A mechanism as in Claim 5, characterized in that the store (20) of compressed air is arranged before the first bore-scraper (40) and that the compressed air feed (30) connecting the store (20) of compressed air and the spray device (70, 71) is led through the first bore-scraper (40) and the gap (42) and runs spirally in the gap (42).

7. A mechanism as in Claim 1 or 2, characterized in that an electric feedpump (80, 82) is provided, which delivers the coating material (16) from the gap (42) through the material feed (60) to the nozzle of the spray device (70', 71).

8. A mechanism as in Claim 7, characterized in that the feedpump (80, 82) may be coupled before the first bore-scraper (40) or between the second bore-scraper (41) and the spray device (70', 71) and contains a feeder element (82) which projects through one bore-scraper (40, 41) into the gap (42) and forces the coating material (16) into the material feed (60) to the nozzle of the spray device (70', 71).

9. A mechanism as in one of the preceding Claims, characterized in that a proportioning valve (61) is arranged in the material feed (60).

## Revendications

1. Dispositif pour l'enduction interne de tuyaux, comprenant un premier et un deuxième écouvillon calibré (40, 41) qui sont en appui sur la paroi interne (11) du tuyau et qui peuvent être déplacés dans le tuyau (10), le deuxième écouvillon calibré (41) suivant le premier écouvillon calibré (40) lors d'un mouvement à l'intérieur du tuyau, et un espace intermédiaire (42) situé entre les deux écouvillons calibrés (40, 41) et destiné à recevoir de la matière d'enduction (16), les écouvillons calibrés (40, 41) étant sollicités par une pression pendant le mouvement et la matière d'enduction (16) provenant de l'espace intermédiaire (42), étant appliquée sur la paroi interne du tuyau (11), caractérisé en ce que derrière le deuxième écouvillon (41) est accouplé un dispositif de pulvérisation (70, 71), qui est en communication avec l'espace intermédiaire (42) situé entre les écouvillons calibrés (40, 41) par une conduite pour la matière passée à travers le deuxième écouvillon calibré (41) et qui pulvérise de la matière d'enduction (16) provenant de l'espace intermédiaire (42).

2. Dispositif suivant la revendication 1, caractérisé en ce qu'un câble tracteur (50) est fixé au deuxième écouvillon calibré (41), et est guidé à travers l'espace intermédiaire (42) et d'une manière étanche, au moyen de presse-étoupe (52), à travers le premier écouvillon calibré (40), et en ce qu'un treuil à câble peut être accouplé à une extrémité du tuyau (10) pour le déplacement des écouvillons calibrés (40, 41).

5

3. Dispositif suivant l'une des revendications précédentes, caractérisé en ce que le dispositif de pulvérisation (70, 71) destiné à la pulvérisation de la matière d'enduction (16) est en communication avec un réservoir à air comprimé (20) au moyen d'une conduite à air comprimé (30).

4. Dispositif suivant la revendication 3, caractérisé en ce que le dispositif de pulvérisation (70, 71) présente un ajutage pivotant pouvant être déplacé suivant un mouvement de rotation à l'aide d'air comprimé provenant du réservoir à air comprimé (20) ou au moyen d'un moteur électrique (70').

5. Dispositif suivant la revendication 3 ou 4, caractérisé en ce que le réservoir à air comprimé (20) peut être accouplé devant le premier écouvillon calibré (40) ou entre le deuxième écouvillon calibré (41) et le dispositif de pulvérisation (70, 71) et en ce qu'il peut être déplacé dans le tuyau (10) sur des patins de glissement (21).

6. Dispositif suivant la revendication 5, caractérisé en ce que le réservoir à air comprimé (20) est agencé devant le premier écouvillon calibré (40), en ce que la conduite à air comprimé (30) reliant le réservoir à air comprimé (20) et le dispositif de pulvérisation (70, 71) est passée à travers le premier écouvillon calibré (40) et l'espace intermédiaire (42) et en ce que ladite conduite s'étend sous une forme spiralée dans l'espace intermédiaire (42).

7. Dispositif suivant la revendication 1 ou 2, caractérisé en ce qu'il est prévu une pompe à refouler électrique (80, 82), qui refoule la matière d'enduction (16) de l'espace intermédiaire (42) jusqu'à l'ajutage du dispositif de pulvérisation (70', 71) par la conduite pour la matière (60).

8. Dispositif suivant la revendication 7, caractérisé en ce que la pompe à refouler (80, 82) peut être accouplée devant le premier écouvillon calibré (40) ou entre le deuxième écouvillon calibré (41) et le dispositif de pulvérisation (70', 71) et en ce qu'elle contient un élément d'avancement (82) qui, à travers un écouvillon calibré (40, 41), fait saillie dans l'espace intermédiaire (42) et qui pousse la matière d'enduction (16) dans la conduite de matière (60) vers l'ajutage du dispositif de pulvérisation (70', 71).

9. Dispositif suivant l'une des revendications précédentes, caractérisé en ce qu'une vanne de dosage (61) est agencée dans la conduite de matière (60).

FIG.1

FIG. 2

FIG. 3